# EUROPEAN PATENT APPLICATION

(11) **EP 2 840 812 A1**
(43) Date of publication of application: **25.02.2015**
(21) Application number: 13778467.4
(22) Date of filing: 27.03.2013
(51) Int. Cl.: H04W 4/00, H04W 16/32

(54) **WIRELESS COMMUNICATION SYSTEM AND NETWORK**

(30) Priority: 19.04.2012 JP 2012095536
(71) Applicant: NTT DOCOMO, INC., Chiyoda-ku Tokyo 100-6150 (JP)
(72) Inventor: MORIOKA, Yasufumi, Tokyo 100-6150 (JP); HAPSARI, Wuri Andarmawanti, Tokyo 100-6150 (JP); UMESH, Anil, Tokyo 100-6150 (JP); TAKAHASHI, Hideaki, Tokyo 100-6150 (JP); HAGIWARA, Junichiro, Tokyo 100-6150 (JP); ISHII, Hiroyuki, Palo Alto, California 94304 (US)
(74) Representative: Hoffmann Eitle
(86) International application number: PCT/JP2013/059108
(87) International publication number: WO 2013/157371

(57) **Abstract**

A first base station forms a first cell and communicates by radio with a user apparatus in a first frequency band. A second base station forms a second cell and communicates by radio with the user apparatus in a second frequency band different from the first frequency band. A gateway apparatus serves as a connection point with an external network. Logical paths used for the user apparatus are established respectively through the first base station and the second base station. A communication control section controls the logical paths and radio communication. The user apparatus sends and receives a user signal to and from the external network by using both a first logical path and a second logical path at the same time.

## Description

### Technical Field

The present invention relates to radio communication systems and networks.

### Background Art

As user apparatuses such as smart phones have come to have higher performance and higher functionality in recent years, the amount of traffic in radio communication has increased. Therefore, there is a demand for radio communication systems that have increased processing capability. To improve the processing capability, active use of small-scale base stations and high frequency bands has been proposed. More specifically, proposals include reducing the amount of traffic to be processed by one base station to improve the throughput of the entire radio communication system by using, in addition to large-scale base stations (macro base stations) that cover wide areas, small-scale base stations (such as pico base stations and femto base stations) that cover smaller areas than large-scale base stations, and actively using, in addition to the frequency bands already used for radio communication (such as the 800 MHz band and the 2 GHz band), frequency bands in which a wider bandwidth can be used for radio communication (the 3.5 GHz band, for example) to improve the throughput of the radio communication system.

### Citation List

### Patent Document

Patent Document 1: Japanese Patent Application Publication No. 2010-062875

### Summary of the Invention

### Technical Problem

When small-scale base stations are used in a system, if that system is compared with a system in which only large-scale base stations are used, since a larger number of base stations are required to cover the same zone, the work involved in their introduction and maintenance may be increased. In addition, since the higher the frequency is, the more the electromagnetic waves attenuate (the larger the transfer loss is), radio communication that employs higher frequency bands may have lower communication stability than radio communication that employs lower frequency bands.

In consideration of the above situations, an object of the present invention is to make it possible to reduce the work involved in the introduction and maintenance of small-scale base stations and to improve communication stability.

### Solution to Problem

A radio communication system according to the present invention includes a first base station forming a first cell and capable of executing radio communication in a first frequency band; a second base station forming a second cell smaller than the first cell and capable of executing radio communication in a second frequency band different from the first frequency band; a user apparatus capable of communicating by radio with the first base station and the second base station; a gateway apparatus serving as a connection point with an external network; and a communication control section capable of controlling logical paths used for the user apparatus and established respectively through the first base station and the second base station. The first base station connects through the gateway apparatus to the external network, the second base station connects through the gateway apparatus or directly to the external network, the user apparatus is capable of sending and receiving a user signal to and from the external network by using both a first logical path established through the first base station and a second logical path established through the second base station at the same time, and the communication control section controls radio communication between the first base station and the user apparatus and radio communication between the second base station and the user apparatus.

According to the foregoing configuration, since the communication control section controls radio communication between the second base station and the user apparatus, when compared with a case in which the second base station itself controls radio communication with the user apparatus, the control function of the second base station is simplified, simplifying the configuration of the entire second base station. Therefore, the work involved in introducing (manufacturing and installing), maintaining, and operating the second base station can be reduced. In addition, since the user apparatus can communicate with the external network by using both the first logical path and the second logical path (which means both the first base station and the second base station), the concentration of traffic can be avoided.

In a preferable mode of the present invention, the second frequency band is higher in frequency than the first frequency band, and the communication control section controls the user apparatus so as to send and receive an audio signal via the first logical path and to send and receive a data signal via the second logical path.

According to the foregoing configuration, since a data signal is sent and received through a high-throughput communication path using a higher frequency band and an audio signal is sent and received through a more-stable communication path using a lower frequency band, the improvement in throughput and stable transmission and reception of highly important audio signals can be implemented at the same time.

In a preferable mode of the present invention, the communication control section controls the first base station and the second base station such that, when the user apparatus finds the second base station while being connected to the first base station and communicating by radio via the first logical path, the base station through which the first logical path passes is changed to the second base station.

According to the foregoing configuration, since the logical path is changed (off-loaded) from that through the first base station to that through the second base station when the second base station is found, the concentration of traffic on the first base station can be avoided, while maintaining the continuity of radio communication.

In a preferable mode of the present invention, the second base station includes a gateway unit embedded in the second base station or connected to the second base station; the first logical path is established through the first base station between the gateway apparatus and the user apparatus, and the second logical path is established between the user apparatus and the gateway unit of the second base station; and the user apparatus is capable of communicating with the external network through the gateway apparatus and the gateway unit of the second base station.

According to the foregoing configuration, since the information sent from the user apparatus through the second base station reaches the external network without passing through the gateway apparatus, the amount of traffic that should be processed by the first base station and the gateway apparatus is reduced.

In a preferable mode of the present invention, the first logical path is established through the first base station between the gateway apparatus and the user apparatus, and the second logical path is established through the second base station between the gateway apparatus and the user apparatus; and the user apparatus is capable of communicating with the external network through the gateway apparatus.

According to the foregoing configuration, when compared with a case in which the second base station includes a gateway unit, the configuration of the second base station is further simplified. Therefore, the work involved in introducing (manufacturing and installing), maintaining, and operating the second base station can be further reduced.

In a preferable mode of the present invention, the radio communication system further includes an exchange that is connected to the first base station and that includes the communication control section, and the communication control section of the exchange controls the radio communication between the first base station and the user apparatus by sending a first control signal to the first base station and controls the radio communication between the second base station and the user apparatus by sending a second control signal different from the first control signal to the second base station through the first base station.

In a preferable mode of the present invention, the control of the radio communication between the first base station and the user apparatus based on the first control signal includes control of the transmission and reception schedule of a radio signal between the first base station and the user apparatus, and the control of the radio communication between the second base station and the user apparatus based on the second control signal includes control of the transmission and reception schedule of a radio signal between the second base station and the user apparatus.

In a preferable mode of the present invention, the radio communication system further includes an exchange connected to the first base station; the first base station includes the communication control section; the exchange sends to the first base station a control signal for controlling radio communication of the user apparatus connected to at least one of the first base station and the second base station; and the communication control section of the first base station controls the radio communication between the first base station and the user apparatus on the basis of the control signal when the control signal controls the radio communication between the first base station and the user apparatus, and controls the radio communication between the second base station and the user apparatus on the basis of the control signal when the control signal controls the radio communication between the second base station and the user apparatus.

In a preferable mode of the present invention, the control of the radio communication between the first base station and the user apparatus based on the control signal includes control of the transmission and reception schedule of a radio signal between the first base station and the user apparatus, and the control of the radio communication between the second base station and the user apparatus based on the control signal includes control of the transmission and reception schedule of a radio signal between the second base station and the user apparatus.

A network according to the present invention includes a first base station forming a first cell and capable of executing radio communication in a first frequency band; a second base station forming a second cell smaller than the first cell and capable of executing radio communication in a second frequency band different from the first frequency band; a gateway apparatus serving as a connection point with an external network; and a communication control section capable of controlling logical paths used for a user apparatus and established respectively through the first base station and the second base station. The first base station connects through the gateway apparatus to the external network, the second base station connects through the gateway apparatus or directly to the external network, the first base station and the second base station are capable of communicating with the user apparatus at the same time by respectively using a first logical path established through the first base station and a second logical path established through the second base station, and
the communication control section controls radio communication between the first base station and the user apparatus and radio communication between the second base station and the user apparatus.

### Brief Description of the Drawings

Fig. 1 is a block diagram showing a radio communication system according to a first embodiment of the present invention.
Fig. 2 is a view showing a macro cell formed by a macro base station and small cells formed by small base stations.
Fig. 3 is a view showing a protocol configuration used for communication between a small base station and a gateway unit.
Fig. 4 is a view showing a protocol configuration used for communication between a macro base station and a small base station.
Fig. 5 is a view showing an example of control of logical paths (bearers) executed by an exchange.
Fig. 6 is a block diagram showing the configuration of a user apparatus of the first embodiment.
Fig. 7 is a block diagram showing the configuration of a macro base station of the first embodiment.
Fig. 8 is a block diagram showing the configuration of a small base station of the first embodiment.
Fig. 9 is a block diagram showing the configuration of an exchange of the first embodiment.
Fig. 10 is a block diagram showing the configuration of a gateway apparatus of the first embodiment.
Fig. 11 is a block diagram showing a radio communication system according to a second embodiment of the present invention.
Fig. 12 is a block diagram showing the configuration of a macro base station of a third embodiment of the present invention.

### Description of Embodiments

### First embodiment

### 1.1 Configuration of radio communication system

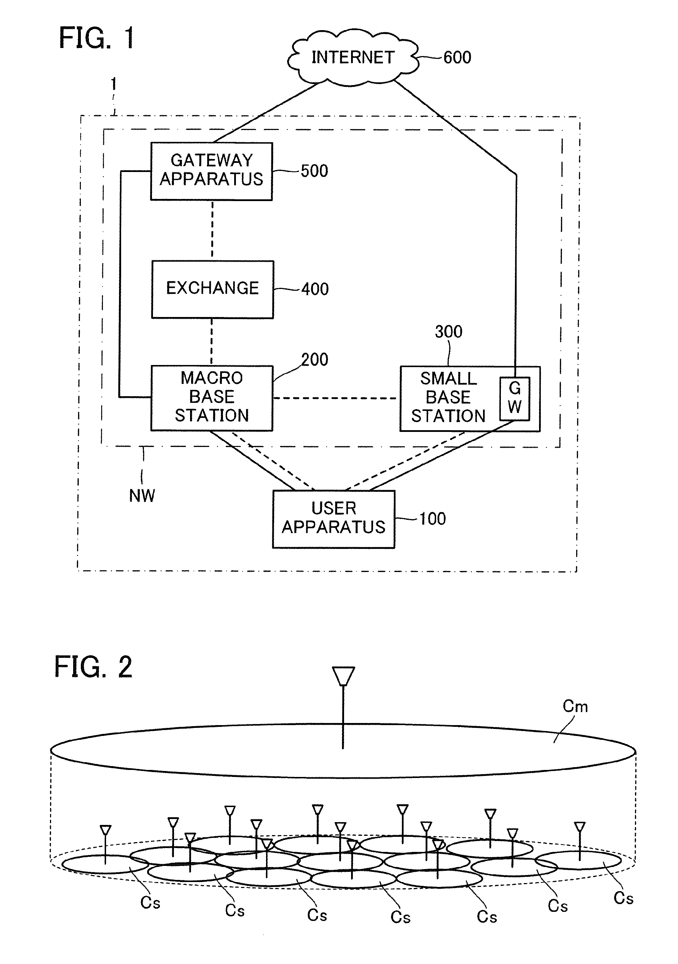

Fig. 1 is a block diagram of a radio communication system according to a first embodiment of the present invention. The radio communication system 1 includes a user apparatus 100, a macro base station 200, a small base station 300, an exchange 400, and a gateway apparatus 500 as elements. A network NW includes the macro base station 200, the small base station 300, the exchange 400, and the gateway apparatus 500.

The elements in the radio communication system 1 execute communication according to a predetermined access technology, such as Long Term Evolution/System Architecture Evolution (LTE/SAE) stipulated in a standard of the Third Generation Partnership Project (3GPP). In the terminology stipulated in the 3GPP standard, the user apparatus 100 corresponds to user equipment (UE), the macro base station 200 corresponds to evolved Node B (eNB), the exchange 400 corresponds to Mobile Management Entity (MME), and the gateway apparatus 500 corresponds to Packet-Data-Network/Serving Gateway (P/S-GW). The small base station 300 has a configuration similar to evolved Node B.

In the present embodiment, the radio communication system 1 operates according to LTE/SAE, but the technical scope of the present invention is not limited to that access technology. The present invention can be applied to other access technologies when required design changes are made.

The user apparatus 100 can communicate by radio with the macro base station 200 and the small base station 300. Any radio communication method can be used between the user apparatus 100 and each of the base stations (the macro base station 200 and the small base station 300). For example, Orthogonal Frequency Division Multiple Access (OFDMA) can be employed for downlink, and Single-Carrier Frequency Division Multiple Access (SC-FDMA) can be employed for uplink.

The macro base station 200 and the small base station 300 are connected to each other by wire. The exchange 400 is connected to the macro base station 200 and the gateway apparatus 500 by wire. The gateway apparatus 500 is connected to the base station 200 and the exchange 400, and is also connected to the Internet 600, which is an external network of the radio communication system 1. In other words, the gateway apparatus 500 can function as a connection point to the Internet 600.

The small base station 300 includes a gateway unit GW. The gateway unit GW is an element connected to the Internet 600, like the gateway apparatus 500. In other words, the gateway unit GW can also function as a connection point to the Internet 600.

Fig. 2 is a view showing a macro cell Cm formed by the macro base station 200 around it and small cells Cs formed by small base stations 300 around them. The antenna of each base station is drawn in the cell C. For convenience of drawing the figure, the macro cell Cm and the small cells Cs are shown in different planes: in practice, however, they can be superimposed on the same plane (such as the ground).

The cell C (the macro cell Cm or the small cells Cs) is an area where the electromagnetic waves emitted from each base station (the macro base station 200 or the small base stations 300) reach the user apparatus 100 effectively. Therefore, the user apparatus 100 can communicate by radio with the base station corresponding to the cell C in which the user apparatus 100 is located.

The small base stations 300 have a smaller size and lower radio transmission capability (average transmission power, maximum transmission power, or the like) than the macro base station 200. The frequency band (a second frequency band, for example, the 3.5 GHz band) used by the small base stations 300 for radio communication has a higher frequency and larger transfer loss than the frequency band (a first frequency band, for example, the 2 GHz band) used by the macro base station 200 for radio communication. Therefore, the small cells Cs have a smaller area than the macro cell Cm. As a result, generally speaking, radio communication using the first frequency band is more stable than radio communication using the second frequency band in many cases.

Considering the fact that the small cells Cs are formed inside the macro cell Cm in a multilayered manner (Cm is overlaid on Cs), when the user apparatus 100 is located in a small cell Cs, the user apparatus 100 can communicate by radio with the small base station 300 that forms the small cell Cs and the macro station 200 that forms the macro cell Cm which covers the small cell Cs.

### 1.2 Transmission and reception of user signal and control signal

The transmission and reception of a user signal and a control signal in the radio communication system 1 will be described by referring to Fig. 1 again. In Fig. 1, solid lines indicate paths used to send and receive user signals (signals indicating user data, such as voice signals and data signals), and dashed lines indicate paths used to send and receive control signals. In other words, the solid lines indicate user (U) plane interfaces and the dashed lines indicate control (C) plane interfaces.

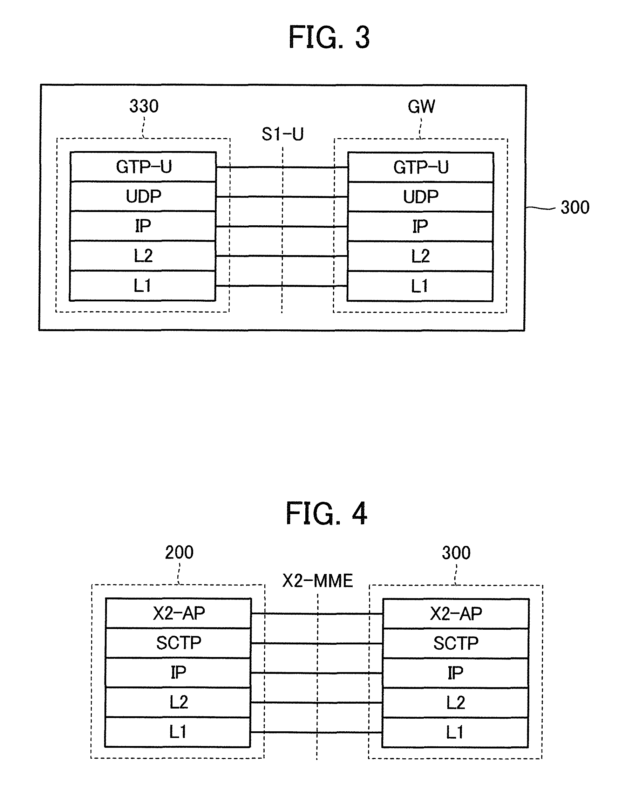

The above-described interfaces employ the protocol configuration for an evolved packet system (EPS) stipulated in 3GPP. U plane communication between the small base station 300 (a control unit 330) and the gateway unit GW in the small base station 300 is executed with the S1-U protocol (Fig. 3). The S1-U protocol is used for user data communication between an eNB and a P/S-GW. C plane communication between the macro base station 200 and the small base station 300 is executed with the X2-MME protocol (Fig. 4). The X2-MME protocol is obtained by applying the S1-MME protocol used for C plane communication between an MME and an eNB to the X2 interface, which is a wired interface between base stations.

The user apparatus 100 can send and receive a user signal to and from the Internet 600 through two paths. Specifically, the user apparatus 100 can execute communication with the Internet 600 through a U plane path that starts from the user apparatus 100 through the macro base station 200 and the gateway apparatus 500 to the Internet 600 and another U plane path that starts from the user apparatus 100 through the gateway unit GW of the small base station 300 (without passing through the gateway apparatus 500) to the Internet 600.

In the radio communication system 1, a user signal is sent and received by using a bearer, which is a logical path. An EPS bearer is established between the user apparatus 100 and a gateway element (the gateway apparatus 500 or the gateway unit GW) on the basis of an instruction (control signal) from the exchange 400. More specifically, the exchange 400 sends a control signal that includes the bearer ID identifying a bearer to be established to elements corresponding to the bearer to be established (for example, the user apparatus 100, the macro base station 200, and the gateway apparatus 500) to establish the bearer. It is possible to establish a plurality of bearers in an identical path. The established bearer is controlled by the exchange 400.

In the following description, a bearer established between the gateway apparatus 500 and the user apparatus 100 through the macro base station 200 is called a macro bearer, and a bearer established between the gateway unit GW of the small base station 300 and the user apparatus 100 is called a small bearer. The user apparatus 100 can send and receive a user signal to and from the Internet 600 by using both the macro bearer and the small bearer at the same time.

Considering the fact that radio communication with the macro base station 200 by using the first frequency band is more stable than radio communication with the small base station 300 by using the second frequency band, as described earlier, it is preferable that the user apparatus 100 select the macro bearer or the small bearer depending on the level of importance of information to be sent or received, the tolerance in delay, and other factors. For example, it is preferable that the exchange 400 control the user apparatus 100 such that an audio signal is sent and received by using the macro bearer while a data signal is sent and received by using the small bearer.

The exchange 400 can also control radio communication between the macro base station 200 and the user apparatus 100 and radio communication between the small base station 300 and the user apparatus 100. More specifically, for example, the exchange 400 can control radio communication between the macro base station 200 and the user apparatus 100 by sending to the macro base station 200 a first control signal that includes scheduling information for downlink communication from the macro base station 200, and can also control radio communication between the small base station 300 and the user apparatus 100 by sending to the small base station 300 a second control signal that includes scheduling information for downlink communication from the small base station 300. In other words, the exchange 400 can control radio communication by sending different control signals to the macro base station 200 and the small base station 300.

As described earlier, since radio communication with the macro base station 200 by using the first frequency band is more stable, it is preferable that control signals related to the control of the user apparatus 100 itself (for example, transmission power control and handover control of the user apparatus 100) be sent from the exchange 400 through the macro base station 200 to the user apparatus 100.

### 1.3 Controlling bearer

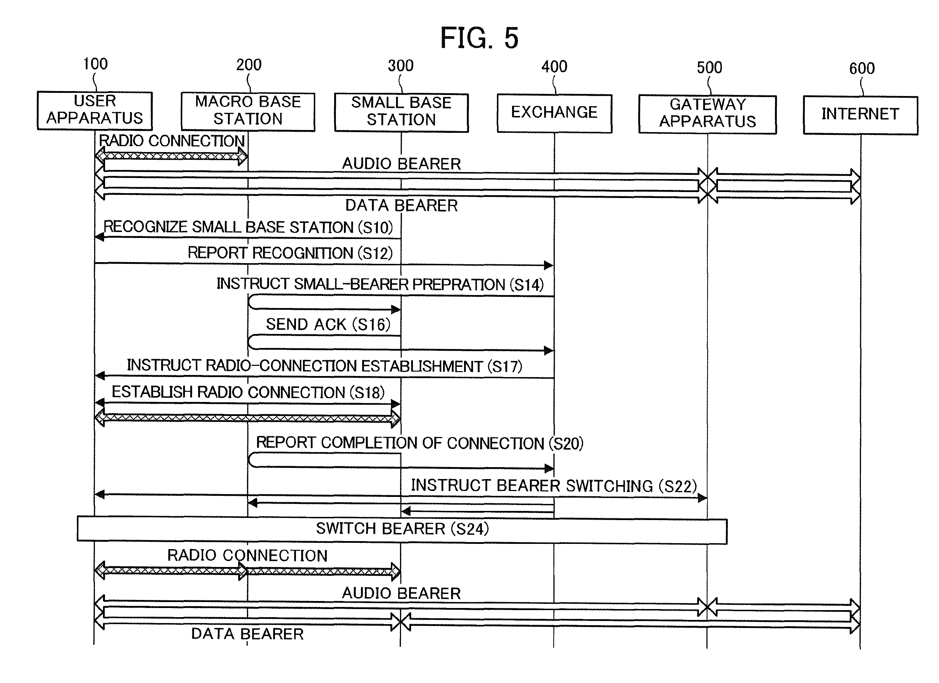

An example of bearer control executed by the exchange 400 will be described with reference to Fig. 5. In the example shown in Fig. 5, it is assumed in an initial stage that the user apparatus 100 and the macro base station 200 are connected by radio and that an audio bearer and a data bearer are established through the macro base station 200 between the user apparatus 100 and the gateway apparatus 500. It is understood that the audio bearer and the data bearer above are macro bearers. The user apparatus 100 sends and receives an audio signal by using the audio bearer and sends and receives a data signal by using the data bearer.

When the user apparatus 100 moves and enters a small cell Cs, the user apparatus 100 receives a radio signal from the small base station 300 that forms the small cell Cs and recognizes (finds) the existence of the small base station 300 (S10).

The user apparatus 100 sends to the exchange 400, through the macro base station 200 to which the connection is being made, a control signal that reports that the small base station 300 that can execute higher-speed radio communication was found (S12). After receiving the control signal, the exchange 400 determines that the data bearer that has been established for the user apparatus 100 is to be changed from a macro bearer to a small bearer. In the above configuration, the exchange 400 determines a bearer to be switched. Another configuration can be employed in which the control signal includes an instruction that instructs the currently established data bearer (macro bearer) to be changed to a small bearer.

Before switching to a small bearer, the exchange 400 instructs the small base station 300 to prepare a small bearer (S14). The small base station 300 sends a control signal (Ack signal) indicating that the small base station 300 has received the instruction and will follow that instruction, to the exchange 400 (S 16), and executes small-bearer preparation. The exchange 400 instructs the user apparatus 100 to establish a radio connection (RRC connection) between the user apparatus 100 and the small base station 300 (S 17). The user apparatus 100 and the small base station 300 exchange control signals to establish a radio connection (S18). When the radio connection is established, the small base station 300 sends to the exchange 400 a control signal to report that the user apparatus 100 and the small base station 300 have been connected by radio (S20).

After the radio connection is established between the user apparatus 100 and the small base station 300, the exchange 400 instructs that the data bearer be switched from a macro bearer to a small bearer (S22). More specifically, the exchange 400 sends to each element (the user apparatus 100, the macro base station 200, the small base station 300, and the gateway apparatus 500) a control signal that instructs that the macro base station 200 be deleted from a relay point list for the data bearer and one end of the data bearer be changed from the gateway apparatus 500 to the gateway unit GW of the small base station 300. Each element executes switching of the data bearer on the basis of the control signal from the exchange 400 (S24).

In the above description, the bearer (EPS bearer) set between the user apparatus 100 and the gateway (the gateway apparatus 500, the gateway unit GW) is switched as a whole. Another configuration can be employed, however, in which the radio bearer set between the user apparatus 100 and the base station (the macro base station 200, the small base station 300) and the S1 bearer set between the base stations and the gateway are switched individually.

As a result of the above bearer switching, the data bearer is switched from a macro bearer to a small bearer whereas the audio bearer is maintained as a macro bearer. Therefore, after the bearer switching, the user apparatus 100 sends and receives an audio signal through the macro base station 200, whereas the user apparatus 100 sends and receives a data signal through the small base station 300.

### 1. 4 Configuration of each element

### 1.4.1 Configuration of user apparatus

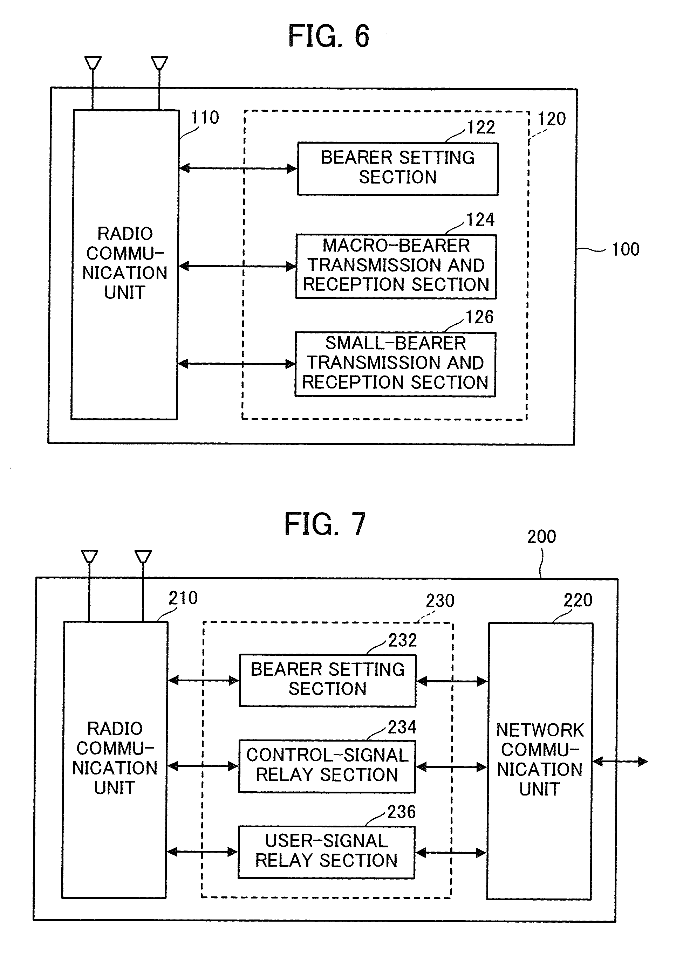

Fig. 6 is a block diagram showing the configuration of the user apparatus 100 according to the present embodiment. The user apparatus 100 includes a radio communication unit 110 and a control unit 120. For convenience, an output unit for outputting audio and video, an input unit for receiving user instructions, and other units are omitted.

The radio communication unit 110 executes radio communication with each base station (the macro base station 200, the small base station 300), and includes transmission and reception antennas handling frequency bands, a receiving circuit for receiving a radio signal (electromagnetic waves) in the frequency band corresponding to each base station and for converting the signal to an electrical signal, and a transmission circuit for converting an electrical signal such as an audio signal or a data signal to a radio signal corresponding to the frequency band of the transmission-destination base station.

The control unit 120 includes a bearer setting section 122, a macro-bearer transmission and reception section 124, and a small-bearer transmission and reception section 126. The bearer setting section 122 establishes a bearer on the basis of an instruction from the exchange 400 and also controls the bearer (for example, executes bearer switching, described earlier) on the basis of an instruction from the macro base station 200 or the exchange 400. The macro-bearer transmission and reception section 124 sends and receives a radio signal to and from the macro base station 200 through the radio communication unit 110. In other words, the macro-bearer transmission and reception section 124 executes communication by using a macro bearer. The small-bearer transmission and reception section 126 sends and receives a radio signal to and from the small base station 300 through the radio communication unit 110. In other words, the small-bearer transmission and reception section 126 executes communication by using a small bearer.

The control unit 120 and the bearer setting section 122, the macro-bearer transmission and reception section 124, and the small-bearer transmission and reception section 126 included in the control unit 120 are functional blocks implemented when a central processing unit (CPU), not shown, in the user apparatus 100 executes a computer program stored in a storage section, not shown, and functions according to the computer program.

### 1.4.2 Configuration of macro base station

Fig. 7 is a block diagram showing the configuration of the macro base station 200 according to the present embodiment. The macro base station 200 includes a radio communication unit 210, a network communication unit 220, and a control unit 230. The radio communication unit 210 executes radio communication with the user apparatus 100 and has a configuration similar to the radio communication unit 110 of the user apparatus 100 in the frequency band to be used by the macro base station 200. The network communication unit 220 executes communication with other nodes (the small base station 300, the exchange 400, the gateway apparatus 500, and others) in the network NW, and exchanges electrical signals with the other nodes by wire or by radio.

The control unit 230 includes a bearer setting section 232, a control-signal relay section 234, and a user-signal relay section 236. The bearer setting section 232 has a configuration similar to the bearer setting section 122 of the user apparatus 100. The control-signal relay section 234 relays a control signal from any one of the user apparatus 100, the small base station 300, and the exchange 400 to another, if necessary. The user-signal relay section 236 relays a user signal from the user apparatus 100 to the gateway apparatus 500, and also relays a user signal from the gateway apparatus 500 to the user apparatus 100.

The control unit 230 and the bearer setting section 232, the control-signal relay section 234, and the user-signal relay section 236 included in the control unit 230 are functional blocks implemented when a CPU, not shown, in the macro base station 200 executes a computer program stored in a storage section, not shown, and functions according to the computer program.

### 1.4.3 Configuration of small base station

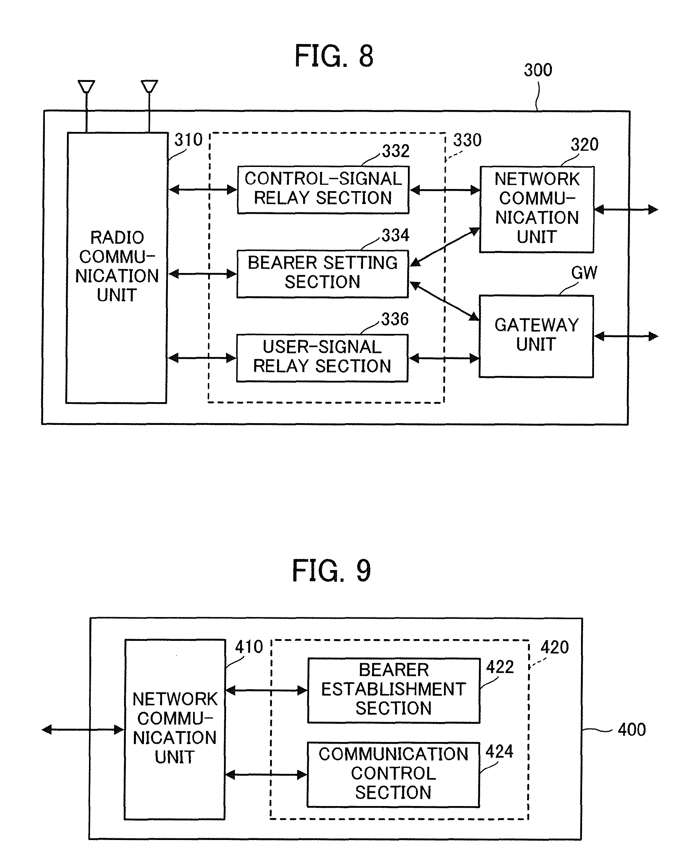

Fig. 8 is a block diagram showing the configuration of the small base station 300 according to the present embodiment. The small base station 300 includes a radio communication unit 310, a network communication unit 320, a control unit 330, and the gateway unit GW. The radio communication unit 310 executes radio communication with the user apparatus 100 and has a configuration similar to the radio communication unit 210 of the macro base station 200 in the frequency band to be used by the small base station 300. The network communication unit 320 executes communication with other nodes (the macro base station 200, the exchange 400, the gateway apparatus 500, and others) in the network NW, and has a configuration similar to the network communication unit 220 of the macro base station 200.

The control unit 330 includes a control-signal relay section 332, a bearer setting section 334, and a user-signal relay section 336. The control-signal relay section 332 sends to the user apparatus 100 a control signal directed to the user apparatus 100 and received from the macro base station 200, and also sends to the macro base station 200 a control signal directed to the macro base station 200 and received from the user apparatus 100. The bearer setting section 334 has a configuration similar to the bearer setting section 122 of the user apparatus 100. The user-signal relay section 336 relays user data communication between the user apparatus 100 and the gateway unit GW.

The gateway unit GW has a function similar to the gateway apparatus 500. The gateway unit GW establishes a bearer on the basis of an instruction from the exchange 400 and also controls the bearer on the basis of an instruction from the macro base station 200 or the exchange 400. The bearer established for the gateway unit GW functions through the bearer setting section 334. The gateway unit GW sends to the Internet 600 a user signal sent from the user apparatus 100 by using the small bearer, and also sends to the user apparatus 100 by using the bearer a user signal received from the Internet 600. Another configuration can also be employed in which the gateway unit GW is provided separately from the small base station 300 and is connected to the small base station 300.

### 1.4.4 Configuration of exchange

Fig. 9 is a block diagram showing the configuration of the exchange 400 according to the present embodiment. The exchange 400 includes a network communication unit 410 and a control unit 420. The network communication unit 410 executes communication with other nodes (the macro base station 200, the small base station 300, the gateway apparatus 500, and others) in the network NW, and has a configuration similar to the network communication unit 220 of the macro base station 200.

The control unit 420 includes a bearer establishment section 422 and a communication control section 424. The bearer establishment section 422 controls the bearer setting sections (122, 232, 334, and 532). The control unit 420 sends to the element corresponding to a bearer to be established a control signal that includes the bearer ID identifying the bearer to be established, to establish the bearer, as described earlier in Item 1.2. The communication control section 424 controls a bearer to be established through each base station, and, as described earlier in Item 1.3, instructs bearer switching at timing such as when a small cell Cs is found. The communication control section 424 sends control signals to the macro base station 200 and the small base station 300 and controls radio communication between the macro base station 200 and the user apparatus 100 and radio communication between the small base station 300 and the user apparatus 100, as described earlier in Item 1.2.

The control unit 420 and the bearer establishment section 422 and the communication control section 424 included in the control unit 420 are functional blocks implemented when a CPU, not shown, in the exchange 400 executes a computer program stored in a storage section, not shown, and functions according to the computer program.

### 1.4.5 Configuration of gateway apparatus

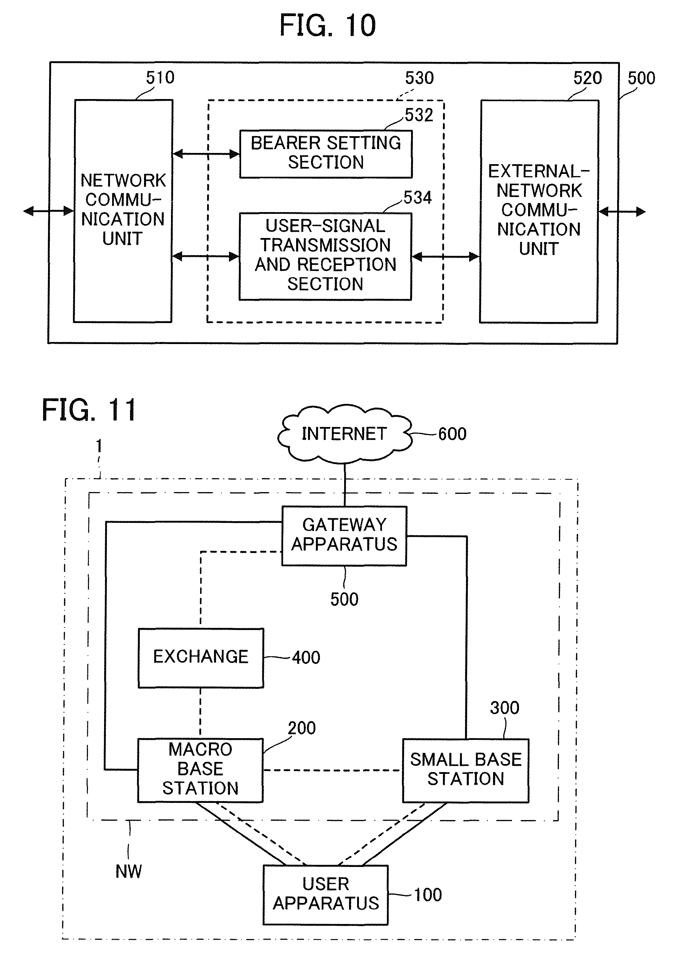

Fig. 10 is a block diagram showing the configuration of the gateway apparatus 500 according to the present embodiment. The gateway apparatus 500 includes a network communication unit 510, an external-network communication unit 520, and a control unit 530. The network communication unit 510 executes communication with other nodes (the macro base station 200, the small base station 300, the exchange 400, and others) in the network NW, and has a configuration similar to the network communication unit 220 of the macro base station 200. The external-network communication unit 520 executes communication with the Internet 600, and executes user-signal protocol conversion, if necessary.

The control unit 530 includes a bearer setting section 532 and a user-signal transmission and reception section 534. The bearer setting section 532 has a configuration similar to the bearer setting section 122 of the user apparatus 100. The user-signal transmission and reception section 534 sends to the Internet 600 a user signal sent to the gateway apparatus 500 by using the bearer, and also sends to the user apparatus 100 by using the bearer a user signal received from the Internet 600.

The control unit 530 and the bearer setting section 532 and the user-signal transmission and reception section 534 included in the control unit 530 are functional blocks implemented when a CPU, not shown, in the gateway apparatus 500 executes a computer program stored in a storage section, not shown, and functions according to the computer program.

### 1.5 Advantages of present embodiment

According to the first embodiment, described above, since the exchange 400 controls radio communication between the small base station 300 and the user apparatus 100, the control function of the small base station 300 is simplified, simplifying the entire configuration of the small base station 300, when compared with a case in which the small base station 300 itself controls the radio communication. Therefore, the work involved in introducing (manufacturing and installing), maintaining, and operating the small base station 300 can be reduced.

Since the user apparatus 100 can communicate with the Internet 600 through both the gateway apparatus 500 and the gateway unit GW of the small base station 300, the concentration of traffic is avoided. In addition, throughput improvement and stable transmission and reception of important information are implemented at the same time when a huge amount of information (such as data signals) are sent and received via a high-throughput communication path using a higher frequency band and important information (such as control signals and audio signals) are sent and received via a highly stable communication path using a lower frequency band.

### Second embodiment

A second embodiment of the present invention will be described below. In each exemplified embodiment described below, components having effects and functions similar to those shown in the first embodiment are also assigned the same reference numerals used in the foregoing description, and a description of each of the components is omitted, if unnecessary.

### 2.1 Configuration of radio communication system

Fig. 11 is a block diagram of a radio communication system 1 according to a second embodiment of the present invention. A small base station 300 of the second embodiment is not provided with the gateway unit GW and is connected to a gateway apparatus 500. U plane communication between the small base station 300 and the gateway apparatus 500 is executed by using the S1-U protocol.

A user apparatus 100 can send and receive a user signal to and from the Internet 600 via two paths. Specifically, the user apparatus 100 can execute communication via a U-plane path from the user apparatus 100 through a macro base station 200 and the gateway apparatus 500 to the Internet 600 and via a U-plane path from the user apparatus 100 through the small base station 300 and the gateway apparatus 500 to the Internet 600.

Based on instructions from an exchange 400 (bearer establishment section 422), a first bearer is established through the macro base station 200 between the gateway apparatus 500 and the user apparatus 100, and a second bearer is established through the small base station 300 between the gateway apparatus 500 and the user apparatus 100.

### 2.2 Advantages of present embodiment

The second embodiment provides effects and advantages similar to the first embodiment. In particular, since the small base station 300 does not include the gateway unit GW, the configuration of the small base station 300 is further simplified. Therefore, the work involved in introducing (manufacturing and installing), maintaining, and operating the small base station 300 can be further reduced.

### Third embodiment

### 3.1 Configuration of macro base station

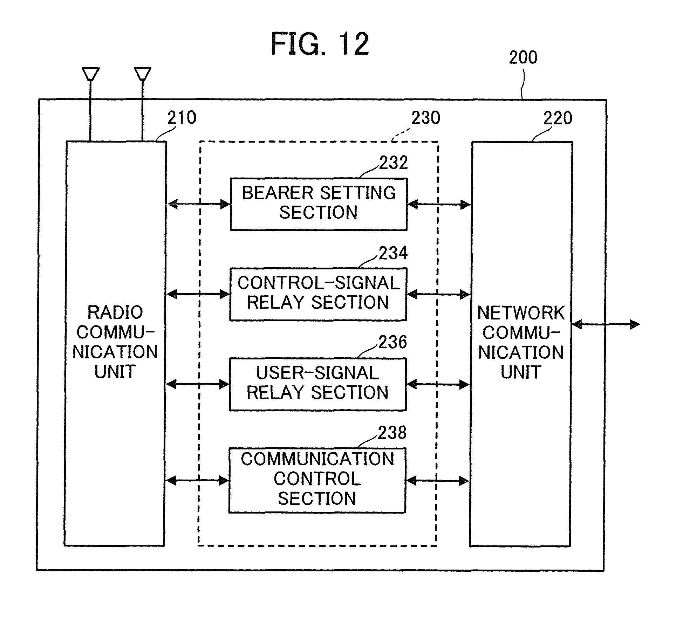

Fig. 12 is a block diagram showing the configuration of a macro base station 200 according to a third embodiment of the present invention. The macro base station 200 further includes a communication control section 238. The communication control section 238 of the macro base station 200 has a function similar to the communication control section 424 of the exchange 400 of the first embodiment.

The communication control section 238 of the macro base station 200 cooperates with the exchange 400 (the communication control section 424) to control radio communication of the user apparatus 100. More specifically, the exchange 400 sends to the macro base station 200 a control signal for controlling radio communication of the user apparatus 100 that connects by radio to one or both of the macro base station 200 and the small base station 300. When the received control signal is for controlling radio communication between the macro base station 200 and the user apparatus 100, the communication control section 238 of the macro base station 200 controls radio communication between the macro base station 200 and the user apparatus 100 (radio communication using a macro bearer) on the basis of the control signal. When the received control signal is for controlling radio communication between the small base station 300 and the user apparatus 100, the communication control section 238 of the macro base station 200 controls radio communication between the small base station 300 and the user apparatus 100 (radio communication using a small bearer) on the basis of the control signal.

### 3.2 Advantages of present embodiment

The third embodiment provides effects and advantages similar to the above embodiments. Since the macro base station 200 controls both the radio communication using the macro bearer and the radio communication using the small bearer, when compared with a case in which the exchange 400 controls each radio communication, the radio communication can be controlled more precisely on the basis of information possessed by the macro base station 200 only.

### Modifications

The above embodiments can be modified in various ways. Specific modifications will be exemplified below. Two or more modes selected in a desired manner from the above embodiments and the following modifications can be combined appropriately unless they contradict each other.

### 4.1 First modification

In the above embodiments, the exchange 400 sends a control signal through the macro base station 200 to the small base station 300. However, the exchange 400 may be directly connected to the small base station 300 to directly send a control signal to the small base station 300. In that case, C-plane communication between the exchange 400 and the small base station 300 is executed by using the S1-MME protocol, described earlier.

### 4.2 Second modification

In the above embodiments, a U-plane path is not provided between the macro base station 200 and the small base station 300. However, a U-plane path may be provided between the macro base station 200 and the small base station 300. In that case, a small bearer may be established between the user apparatus 100 and the gateway apparatus 500 through the small base station 300 and the macro base station 200.

### 4.3 Third modification

In the above embodiments, the logical paths controlled by the communication control sections (424, 238) are bearers. However, the communication control sections (424, 238) may control other logical paths, such as sessions in the Internet Protocol (IP) level.

### 4.4 Fourth modification

In the above embodiments, the macro base station 200 and the small base station 300 are connected by wire (X2 interface). They may be controlled by radio, however. Communication between the macro base station 200 and the small base station 300 can be executed by using any interface. For example, X2 over Un, RRC over Uu, S1 proxy, S1 proxy over Un, and other interfaces can be used.

### 4.5 Fifth modification

The user apparatus 100 can be any apparatus that can communicate by radio with each base station (the macro base station 200 and the small base station 300). The user apparatus 100 may be a portable telephone terminal, such as a feature phone or a smart phone, a desktop personal computer, a notebook personal computer, an ultra-mobile personal computer (UMPC), a portable game machine, or any other radio terminal.

### 4.6 Sixth modification

The function executed by the CPU in each element (the user apparatus 100, the macro base station 200, the small base station 300, the exchange 400, and the gateway apparatus 500) in the radio communication system 1 may be executed by, instead of the CPU, hardware or a programmable logical device, such as a field programmable gate array (FPGA) or a digital signal processor (DSP).

### Reference Numerals

- 1:: Radio communication system
- 100:: User apparatus
- 110:: Radio communication unit
- 120:: Control unit
- 122:: Bearer setting section
- 124:: Macro-bearer transmission and reception section
- 126:: Small-bearer transmission and reception section
- 200:: Macro base station
- 210:: Radio communication unit
- 220:: Network communication unit
- 230:: Control unit
- 232:: Bearer setting section
- 234:: Control-signal relay section
- 236:: User-signal relay section
- 238:: Communication control section
- 300:: Small base station
- 310:: Radio communication unit
- 320:: Network communication unit
- 330:: Control unit
- 332:: Control-signal relay section
- 334:: Bearer setting section
- 336:: User-signal relay section
- 400:: Exchange
- 410:: Network communication unit
- 420:: Control unit
- 422:: Bearer establishment section
- 424:: Communication control section
- 500:: Gateway apparatus
- 510:: Network communication unit
- 520:: External-network communication unit
- 530:: Control unit
- 532:: Bearer setting section
- 534:: User-signal transmission and reception section
- 600:: Internet
- C (Cm, Cs):: Cell
- GW:: Gateway unit
- ID:: Bearer
- NW:: Network

## Claims

1. A radio communication system comprising:
a first base station forming a first cell and capable of executing radio communication in a first frequency band;
a second base station forming a second cell smaller than the first cell and capable of executing radio communication in a second frequency band different from the first frequency band;
a user apparatus capable of communicating by radio with the first base station and the second base station;
a gateway apparatus serving as a connection point with an external network; and
a communication control section capable of controlling logical paths used for the user apparatus and established respectively through the first base station and the second base station;
the first base station connecting through the gateway apparatus to the external network,
the second base station connecting through the gateway apparatus or directly to the external network,
the user apparatus being capable of sending and receiving a user signal to and from the external network by using both a first logical path established through the first base station and a second logical path established through the second base station at the same time, and
the communication control section controlling radio communication between the first base station and the user apparatus and radio communication between the second base station and the user apparatus.

2. The radio communication system according to Claim 1,
wherein the second frequency band is higher in frequency than the first frequency band; and
the communication control section controls the user apparatus so as to send and receive an audio signal via the first logical path and to send and receive a data signal via the second logical path.

3. The radio communication system according to Claim 1, wherein the communication control section controls the first base station and the second base station such that, when the user apparatus finds the second base station while being connected to the first base station and communicating by radio via the first logical path, the base station through which the first logical path passes is changed to the second base station.

4. The radio communication system according to Claim 1,
wherein the second base station comprises a gateway unit embedded in the second base station or connected to the second base station;
the first logical path is established through the first base station between the gateway apparatus and the user apparatus, and the second logical path is established between the user apparatus and the gateway unit of the second base station; and
the user apparatus is capable of communicating with the external network through the gateway apparatus and the gateway unit of the second base station.

5. The radio communication system according to Claim 1,
wherein the first logical path is established through the first base station between the gateway apparatus and the user apparatus, and the second logical path is established through the second base station between the gateway apparatus and the user apparatus; and
the user apparatus is capable of communicating with the external network through the gateway apparatus.

6. The radio communication system according to Claim 1, further comprising an exchange connected to the first base station and comprising the communication control section,
wherein the communication control section of the exchange controls the radio communication between the first base station and the user apparatus by sending a first control signal to the first base station and controls the radio communication between the second base station and the user apparatus by sending a second control signal different from the first control signal to the second base station through the first base station.

7. The radio communication system according to Claim 6, wherein the control of the radio communication between the first base station and the user apparatus based on the first control signal includes control of the transmission and reception schedule of a radio signal between the first base station and the user apparatus, and the control of the radio communication between the second base station and the user apparatus based on the second control signal includes control of the transmission and reception schedule of a radio signal between the second base station and the user apparatus.

8. The radio communication system according to Claim 1, further comprising an exchange connected to the first base station,
wherein the first base station comprises the communication control section;
the exchange sends to the first base station a control signal for controlling radio communication of the user apparatus connected to at least one of the first base station and the second base station; and
the communication control section of the first base station controls the radio communication between the first base station and the user apparatus on the basis of the control signal when the control signal controls the radio communication between the first base station and the user apparatus, and controls the radio communication between the second base station and the user apparatus on the basis of the control signal when the control signal controls the radio communication between the second base station and the user apparatus.

9. The radio communication system according to Claim 8, wherein the control of the radio communication between the first base station and the user apparatus based on the control signal includes control of the transmission and reception schedule of a radio signal between the first base station and the user apparatus, and the control of the radio communication between the second base station and the user apparatus based on the control signal includes control of the transmission and reception schedule of a radio signal between the second base station and the user apparatus.

10. A network comprising:
a first base station forming a first cell and capable of executing radio communication in a first frequency band;
a second base station forming a second cell smaller than the first cell and capable of executing radio communication in a second frequency band different from the first frequency band;
a gateway apparatus serving as a connection point with an external network; and
a communication control section capable of controlling logical paths used for a user apparatus and established respectively through the first base station and the second base station;
the first base station connecting through the gateway apparatus to the external network,
the second base station connecting through the gateway apparatus or directly to the external network,
the first base station and the second base station being capable of communicating with the user apparatus at the same time by respectively using a first logical path established through the first base station and a second logical path established through the second base station, and
the communication control section controlling radio communication between the first base station and the user apparatus and radio communication between the second base station and the user apparatus.
